# EUROPÄISCHE PATENTSCHRIFT

(11) **EP 1 398 723 B1**
(45) Veröffentlichungstag und Bekanntmachung des Hinweises auf die Patenterteilung: **22.08.2007**
(21) Anmeldenummer: 03015425.6
(22) Anmeldetag: 09.07.2003
(51) Int. Cl.: G06K 7/00, H01R 13/24, G06K 13/08

(54) **Kontaktiervorrichtung für eine Chipkarte, insbesondere für eine SIM-Karte**
Contacting device for a chip card and in particular for a SIM card
Dispositif à contacts pour une carte à puce, en particulier pour une carte SIM

(30) Priorität: 15.08.2002 DE 10238156
(43) Veröffentlichungstag der Anmeldung: 17.03.2004
(60) Teilanmeldung: 05018041.3
(73) Patentinhaber: Lumberg Connect GmbH, 58579 Schalksmühle (DE)
(72) Erfinder: Pellizari, Dirk, 42327 Wuppertal (DE)
(74) Vertreter: Ostriga, Sonnet, Wirths & Roche

(56) Entgegenhaltungen:
- EP-A- 0 520 080
- DE-A- 19 521 721
- US-A- 5 257 414
- US-A- 5 615 250
- US-B1- 6 319 036

## Beschreibung

Die Erfindung betrifft eine Kontaktiervorrichtung für eine Chipkarte, insbesondere für eine SIM-Karte, nach dem Oberbegriff des Anspruchs 1.

Derartige Kontaktiervorrichtungen, in der Umgangssprache und auch in der Patentliteratur häufig unzutreffend mit "Chipkarten-Leser", "SIM-Card-Reader" od. dgl. bezeichnet, dienen zur Halterung und Bereitstellung der elektrischen Kontaktierung der Kontakte einer Chipoder SIM-Karte (SIM = "Subscriber Identity Module") mit Leiterbahnen eines Schaltungsträgers wie insbesondere einer Leiterplatte, die in einem elektronischen Gerät, z.B. einem Mobiltelefon, untergebracht ist.

Eine Kontaktiervorrichtung solcher Art ist beispielsweise aus DE 195 21 721 A1 bekannt, von der die vorliegende Erfindung ausgeht. Dabei sind im Kontaktträger neben den sechs üblichen Lesekontakten wenigstens zwei zusätzliche Schaltkontakte untergebracht, die dazu dienen, bei geschlossenem Deckel der Kontaktiervorrichtung, der aus Metall oder metallisiertem Kunststoff besteht, eine Erd- bzw. Masseverbindung zur Leiterplatte herzustellen und dadurch eine den EMV-Forderungen gemäße Schirmung zu ermöglichen. Des weiteren ist im Deckel eine Andruckfeder ausgebildet, die beim Einschieben der SIM-Karte in den geöffneten Deckel in Richtung zum Kontaktträger hin gedrückt wird und die nach Schließen des Deckels, der durch Längsverschieben in eine gesicherte Verriegelungslage verbracht wird, die Schaltkontakte kontaktiert, die sodann, also sequentiell, ihrerseits die Verbindung zur Masse der Leiterplatte herstellen.

Aufgabe vorliegender Erfindung ist insbesondere die Schaffung einer geschirmten Kontaktiervorrichtung, die in ihrem Aufbau vereinfacht ist.

Die erfindungsgemäße Lösung dieser Aufgabe besteht in den Merkmalen des unabhängigen Anspruchs 1. Dem entsprechend ist eine Kontaktiervorrichtung für eine SIM-Chipkarte eines elektronischen Geräts mit einem Kontaktträger mit darin aufgenommenen Kontaktelementen zur Verbindung der Kontakte der Chipkarte mit Leiterbahnen einer in dem Gerät enthaltenen Leiterplatte, einem elektrisch leitfähigen Deckel, der schwenkbar am Kontaktträger gelagert ist, und eine Aufnahme für die SIM-Karte beinhaltet, und mit einer Einrichtung zur Schirmung durch eine leitende Verbindung zwischen dem Deckel und einer Erd- oder Massekontaktierungsfläche der Leiterplatte dadurch gekennzeichnet, dass der Deckel einen Kontaktabschnitt aufweist, welcher am Kontaktträger vorbei geführt ist oder ihn durchgreift und im geschlossenen Zustand den Erd- oder Massekontakt der Leiterplatte unmittelbar kontaktiert.

Zweckmäßige und besonders vorteilhafte Weiterbildungen bestehen darin, dass der Kontaktabschnitt aus dem Deckelmaterial ausgebildet ist, wobei der Kontaktabschnitt als federnde Zunge ausgebildet sein kann, die z.B. werkstoffeinheitlich-stoffschlüssig aus dem Deckel, bevorzugt aus dem Randbereich des Deckels, ausgeformt ist. Eine bevorzugte weitere Ausgestaltung besteht darin, dass die Zunge unter dem zur Leiterplatte weisenden, den Kontaktträger flankierenden Rand des Deckels angeordnet ist.

Ein wesentlicher Vorteil der Erfindung besteht zunächst in der besonderen Einfachheit der Kontaktiervorrichtung, und zwar sowohl hinsichtlich ihres Aufbaus als auch im Hinblick auf eine sichere Funktion. Die Fertigung des Deckels ist gegenüber einem herkömmlichen nicht aufwendiger. Der Kontaktabschnitt kann ohne weiteres bei den ohnehin erforderlichen Stanz-, Schnitt- und Biegevorgängen oder in einem Spritzgieß- bzw. Galvanisierverfahren mit berücksichtigt werden. Auch ein Annieten, Anschweißen od.dgl. des Kontaktabschnitts an den Deckel wäre wenig aufwendig.

Im Unterschied zum Stand der Technik erfolgt der Masseschluss nicht sequentiell (Deckel - Schaltkontakt; Schaltkontakt - Platine), sondern unmittelbar durch direkte Kontaktierung des Deckels mit dem Massepotential der elektronischen Schaltung. Um dies zu erreichen, ist es lediglich erforderlich, eine Stelle zur Kontaktierung des Massepotentials im Gerätegehäuse frei zu lassen, damit diese Stelle vom deckelseitigen Kontaktabschnitt berührt werden kann. Besondere Kontakte wie die zusätzlichen Schaltkontakte entsprechend DE 195 21 721 A1 werden nicht benötigt.

Ein weiterer erheblicher Vorteil gegenüber dem in Bezug genommenen Stand der Technik wird darin gesehen, dass die Schirmung auch bei nicht in die Vorrichtung eingesetzter Chipkarte wirksam ist. So ist sichergestellt, dass eine Berührung des elektrisch leitfähigen Deckels, beispielsweise um ihn zum Einsatz einer SIM-Karte zu öffnen, nicht zu einer Beschädigung der Elektronik führen kann, weil auch in diesem Fall elektrostatische Aufladungen zum Massepotential abgeleitet werden.

Die Erfindung wird nachfolgend unter Bezugnahme auf in den beiliegenden Zeichnungen dargestellte Ausführungsbeispiele näher erläutert. Es zeigen:
- Fig. 1: eine perspektivische Darstellung einer Kontaktiervorrichtung entsprechend der Erfindung mit einem Kontaktträger und einem teilweise geöffneten Deckel,
- Fig. 2: eine perspektivische Seitenansicht einer in ein Gerät bzw. Geräteausschnitt eingesetzten Kontaktiervorrichtung bei geschlossenem Deckel,
- Fig. 3: eine vergrößerte Darstellung einer Einzelheit aus Fig. 2, und
- Fig. 4: eine perspektivische Darstellung der Kontaktiervorrichtung mit Blickrichtung auf die Lötseite des Kontaktträgers.

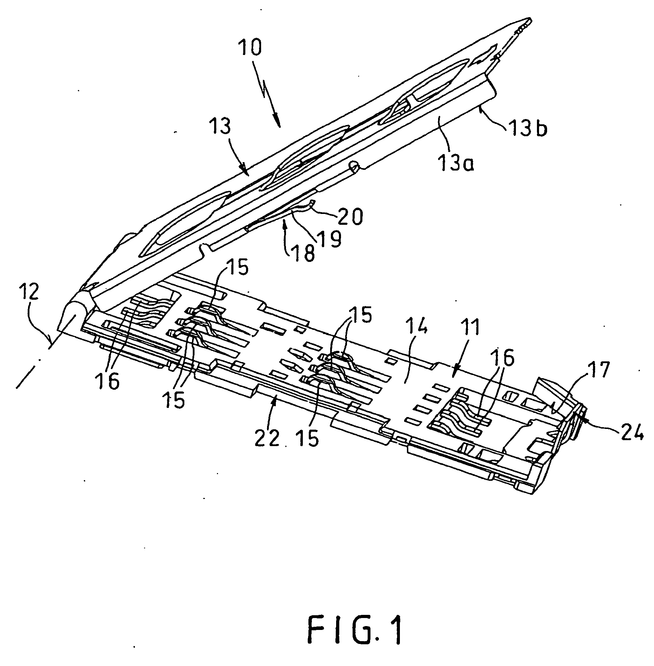

Fig. 1 zeigt eine insgesamt mit 10 bezeichnete Kontaktiervorrichtung für Chip-Karten, insbesondere für SIM-Karten, wie sie beispielsweise in Mobiltelefonen eingesetzt werden.

Die Kontaktiervorrichtung 10 umfasst einen Kontaktträger 11 und einen um eine Achse 12 schwenkbar daran angelenkten Deckel 13, wobei im dargestellten Ausführungsbeispiel die Schwenkachse 12 einer Schmalseite von Kontaktträger 11 und Deckel 13 zugeordnet ist.

Im Kontaktträger 11, dessen Korpus 14 aus elektrisch nicht leitendem Isoliermaterial, insbesondere aus Kunststoff besteht, sind - beim Ausführungsbeispiel sechs - Lesekontakte 15 angeordnet zur Kontaktierung mit Kontakten einer nicht dargestellten SIM-Karte, die in bekannter Weise zwischen Kontaktträger 11 und Deckel 13 in die Vorrichtung 10 eingesetzt wird. Mit 16 sind SMD-Lötfüßchen bezeichnet, die stoffschlüssiger Bestandteil der Lesekontakte 15 sind und die galvanische Verbindung zu einem ebenfalls nicht gezeigten Schaltungsträger, also insbesondere einer Leiterplatte dienen.

Mit 17 ist eine am Kontaktträger 11 angebrachte Kodier-Schrägfläche bezeichnet, die sicherstellt, dass die SIM-Karte, die ihrerseits bekanntermaßen eine entsprechend gebrochene Ecke aufweist, nur mit ihrer korrekten Ausrichtung in die Kontaktiervorrichtung 10 eingesetzt werden kann.

Der Deckel 13 besteht beim dargestellten Ausführungsbeispiel aus einem Blech-Stanz-Biegeteil, also aus einem elektrisch leitenden Material. Er könnte auch aus anderen leitfähigen Materialen bestehen, z.B. aus elektrisch leitendem oder leitfähig beschichtetem Kunststoff.

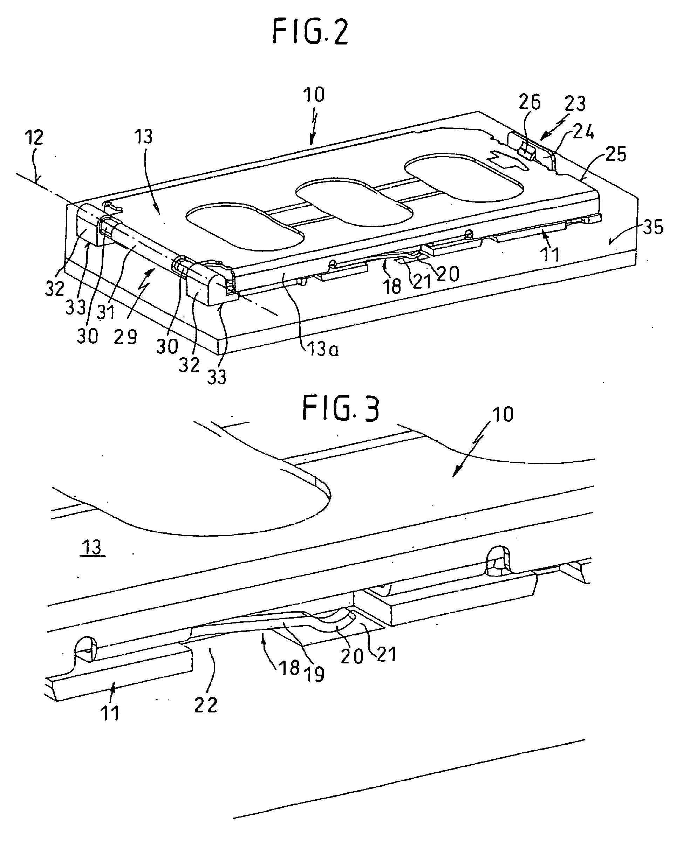

Wie ausgeführt, ist der Deckel 13 an seiner bezüglich Fig. 1 hinteren Schmalkante über die Schwenkachse 12 mit dem Kontaktträger 11 schwenkbar verbunden. Er kann deshalb von einer gegenüber der Darstellung in Fig. 1 noch weiter geöffneten Stellung bis in die Schließstellung verschwenkt werden, die in Fig. 2 dargestellt ist.

Ein wesentliches Merkmal des Deckels 13 entsprechend der Erfindung besteht zunächst darin, dass er einen Kontaktabschnitt 18 aufweist. Dieser zungenförmige Kontaktabschnitt 18 ist beim Ausführungsbeispiel werkstoffeinheitlich-stoffschlüssiger Bestandteil des Deckels 13, d.h. also insbesondere durch Stanzen und Biegen aus dem Deckel 13 selbst herausgeformt. Wie die Figuren erkennen lassen, ist der Kontaktabschnitt 18 einem aus der Hauptebene des Deckels heruntergebogenen Längsseitenrand 13a des Deckels 13 zugeordnet. Schließlich ist die Anordnung des Kontaktabschnitts 18 so getroffen, dass er innerhalb der zum Kontaktträger 11 weisenden Randkante 13b des Deckelrandes 13a angeordnet ist, dem gegenüber das freie Ende der Zunge 19 mit Richtung zum Kontaktträger 11 hin vorsteht.

Fig. 2 zeigt die Kontaktiervorrichtung 10 in einen Geräteausschnitt 35 eingesetzt, wobei nun der Deckel 13 geschlossen dargestellt ist. Da in der Schließstellung des Deckels 13 der Deckelrand 13a den Kontaktträger 11 seitlich zumindest teilweise übergreift, ist folglich der Kontaktabschnitt 18 gewissermaßen "voreilend" angeordnet. Das bedeutet, dass in der Schließstellung des Deckels der Kontaktabschnitt 18 mit seinem kontaktierungsbestimmenden Endabschnitt 20 eine Kontaktfläche 21 berühren und sich unter Federkraft auf ihr abstützen kann, die Teil einer ansonsten nicht näher gezeigten elektronischen Schaltung ist. Bei der Kontaktfläche 21 handelt es sich z.B. um einen Leiterbahnabschnitt des Massepotentials der elektronischen Schaltung.

Wie schließlich aus den Figuren noch zu erkennen ist, befindet sich der Kontaktabschnitt 18 am Deckel 13 relativ zum Kontaktträger 11 an einer Stelle, an der letzterer einen Randausschnitt 22 aufweist. Deshalb kann der Kontaktabschnitt 18 im wesentlichen noch innerhalb des Umrisses des Kontaktträgers 11 angeordnet werden, benötigt also keinen zusätzlichen Flächenbedarf.

Zur Verriegelung des Deckels 13 in seiner Schließstellung bezüglich des Kontaktträgers 11 ist zudem eine Verriegelungsanordnung vorgesehen, die insgesamt mit 23 bezeichnet ist. Diese umfasst einerseits am Kontaktträger 11 an seiner der Schwenkachse 12 gegenüberliegenden Schmalseite eine Riegellasche 24, die nach Art einer Clipsverbindung wiederlösbar mit einem Abschnitt des vorderen Randes 25 des Deckels 13 zusammenwirkt. Beim dargestellten Ausführungsbeispiel erfolgt die Verriegelung mittels einer keilförmigen Riegelzunge 26, die in die Bewegungsbahn der vorderen Randkante 25 des Deckels 13 hineinragt. Wird der Deckel geschlossen, bewegt seine Vorderkante 25 die federelastisch ausgebildete oder angeordnete Riegellasche 24 vorübergehend ausweichend, bis bei geschlossenem Deckel die Riegelzunge 26 die Deckelrandkante 25 hinterfängt, so wie dies in Fig. 2 dargestellt ist.

Durch Schließen des Deckels 13 werden die Kontaktkräfte auf die Kontakte 15 aufgebracht und in der Deckelschließstellung sichergestellt. Daraus resultiert für die Schließstellung der Vorrichtung 10, dass die Kontaktkräfte die sichere Verriegelung des Deckels 13 unterstützen.

Was die an der Stirnkante 25 des Deckels 13 angeordnete Riegellasche 24 betrifft, so sichert diese den Deckel 13 auch gegen ein unerwünschtes Verschieben in Richtung des in Fig. 2 auf die Riegellasche weisenden Pfeils. Eine solche Bewegung könnte ansonsten aufgrund vorhandener Toleranzen möglich sein.

Soll der Deckel 13 geöffnet werden, drückt man die Riegellasche 24 ein wenig nach außen, bis die Riegelzunge 26 die Deckelrandkante 25 wieder freigibt.

Die Riegellasche 24 kann einstückig-stoffschlüssiger Bestandteil des Isolierkörpers des Kontaktträgers 11 sein. Beim dargestellten Ausführungsbeispiel ist eher daran gedacht, die Riegellasche 24 an einem Metallbauteil auszubilden, und zwar insbesondere aus Stabilitäts- und Elastizitätsgründen.

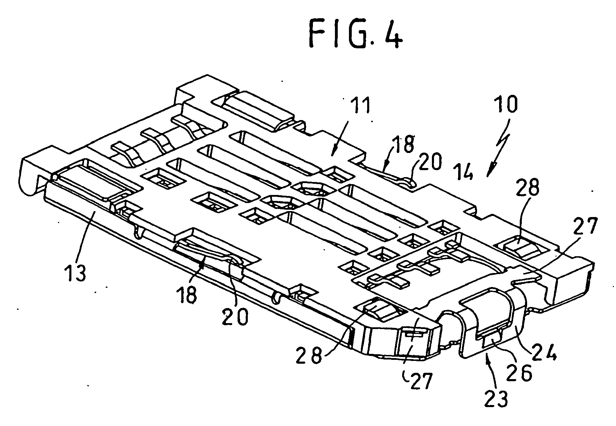

Fig. 4 zeigt die Anordnung einer aus elektrisch leitfähigem Material, insbesondere Metall bestehenden Riegelzunge 24. Mit ihren Verankerungsabschnitten 27 ist die Riegellasche 24 in den Isolierkörper 14 des Kontaktträgers 11 eingespritzt. Die Enden der Abschnitte 27 sind als SMD-Lötfüßchen 28 ausgebildet, womit die Riegellasche 24 und im übrigen auch der Isolierkörper 11 der Kontaktiervorrichtung auf dem Schaltungsträger, also insbesondere einer Leiterplatte, befestigt bzw. zusätzlich gehalten werden kann.

Was die Aufnahme der SIM-Karte in der Kontaktiervorrichtung 10 betrifft, so ist diese nicht dargestellt. Es ist daran gedacht, wie an sich üblich, an der Unterseite des Deckels 13 - in der Regel durch Randumformungen - eine Führung auszubilden, so dass die SIM-Karte in den Deckel 13 eingeschoben werden kann, bevor dieser geschlossen wird.

## Patentansprüche

1. Kontaktiervorrichtung (10) für eine SIM-Chipkarte eines elektronischen Geräts mit
einem Kontaktträger (11) mit darin aufgenommenen Kontaktelementen (15) zur Verbindung der Kontakte der Chipkarte mit Leiterbahnen einer in dem Gerät enthaltenen Leiterplatte,
einem elektrisch leitfähigen Deckel (13), der
schwenkbar am Kontaktträger (11) gelagert ist, und
eine Aufnahme für die SIM-Karte beinhaltet,
und mit einer Einrichtung zur Schirmung durch eine leitende Verbindung zwischen dem Deckel (13) und einer Erd- oder Massekontaktierungsfläche (21) des Schaltungsträgers,
**dadurch gekennzeichnet,**
**dass** der Deckel (13) einen Kontaktabschnitt (18) aufweist, welcher am Kontaktträger (11) vorbei geführt ist oder ihn durchgreift und im geschlossenen Zustand den Erd- oder Massekontakt (21) des Schaltungsträgers unmittelbar kontaktiert.

2. Kontaktiervorrichtung nach Anspruch 1, **dadurch gekennzeichnet, dass** der Kontaktabschnitt (18) aus dem Deckelmaterial ausgebildet ist.

3. Kontaktiervorrichtung nach Anspruch 2, **dadurch gekennzeichnet, dass** der Kontaktabschnitt (18) als federnde Zunge (19) ausgebildet ist.

4. Kontaktiervorrichtung nach Anspruch 2 oder 3, **dadurch gekennzeichnet, dass** der Kontaktabschnitt (18) werkstoffeinheitlich-stoffschlüssig aus dem Deckel (13) ausgeformt ist.

5. Kontaktiervorrichtung nach Anspruch 3 oder 4, **dadurch gekennzeichnet, dass** der Kontaktabschnitt (18) aus dem Randbereich (13a) des Deckels (13) herausgeformt ist.

6. Kontaktiervorrichtung nach einem der Ansprüche 2 bis 4, **dadurch gekennzeichnet, dass** der Kontaktabschnitt (18) unter dem zur Leiterplatte weisenden, den Kontaktträger (11) flankierenden Rand (13b) des Deckels (13) angeordnet ist.

## Claims

1. Contacting device (10) for a SIM chip card of an electronic appliance with
a contact carrier (11) with contact elements (15) taken up therein for connecting the contacts of the chip card to printed conductors of a printed circuit board contained in the appliance,
an electrically conductive cover (13), which is supported pivotably on the contact carrier (11), and
contains a recess for the SIM card,
and with an arrangement for screening due to a conductive connection between the cover (13) and an earth or frame contacting surface (21) of the circuit carrier,
**characterized in that** the cover (13) has a contact section (18), which is led past the contact carrier (11) or penetrates it and in the closed state directly contacts the earth or frame contact (21) of the circuit carrier.

2. Contacting device according to claim 1, **characterized in that** the contact section (18) is formed from the cover material.

3. Contacting device according to claim 2, **characterized in that** the contact section (18) is formed as a springy tongue (19).

4. Contacting device according to claim 2 or 3, **characterized in that** the contact section (18) is formed in a materially uniform, positive bonding manner from the cover (13).

5. Contacting device according to claim 3 or 4, **characterized in that** the contact section (18) is formed from the edge area (13a) of the cover (13).

6. Contacting device according to one of claims 2 to 4, **characterized in that** the contact section (18) is arranged under the edge (13b) of the cover (13) pointing towards the printed circuit board and flanking the contact carrier (11).

## Revendications

1. Dispositif à contacts (10) pour une carte à puce SIM d'un appareil électronique, comprenant :
un support de contacts (11) avec des éléments de contact (15) y étant logés, pour assurer la liaison des contacts de la carte à puce à des pistes conductrices d'une carte de circuit imprimé contenue dans l'appareil,
un couvercle (13) conducteur de l'électricité, qui est monté à pivotement sur le support de contacts (11) et contient un logement pour la carte SIM,
et avec un dispositif d'écrantage, au moyen d'une liaison conductrice entre le couvercle (13) et une surface de contact à la terre et à la masse (21) du support de circuit,
**caractérisé en ce que**
le couvercle (13) présente un tronçon de contact (18), guidé sur le support de contact (11) ou le traversant et qui, à l'état fermé, entre en contact directement avec le contact de terre ou de masse (21) du support de circuit.

2. Dispositif à contacts selon la revendication 1, **caractérisé en ce que** le tronçon de contact (18) est réalisé sous la forme de matériau du couvercle.

3. Dispositif à contacts selon la revendication 2, **caractérisé en ce que** le tronçon de contact (18) est réalisé sous la forme de languette (19) élastique.

4. Dispositif à contacts selon la revendication 2 ou 3, **caractérisé en ce que** le tronçon de contact (18) est formé d'un seul tenant, par une liaison unitaire par la matière, à partir du couvercle (13).

5. Dispositif à contacts selon la revendication 3 ou 4, **caractérisé en ce que** le tronçon de contact (18) est formé à partir de la zone de bordure (13a) du couvercle (13) .

6. Dispositif à contacts selon la revendication 2 à 4, **caractérisé en ce que** le tronçon de contact (18) est disposé sous le bord (13b), présentant la carte de circuit imprimé, flanquant le support de contacts (11) du couvercle (13).
